# EUROPEAN PATENT APPLICATION

(11) **EP 1 304 860 A2**
(43) Date of publication of application: **23.04.2003**
(21) Application number: 02078936.8
(22) Date of filing: 23.09.2002
(51) Int. Cl.: H04N 1/00

(54) **System and method of transmitting and accessing digital images over a communication network**

(30) Priority: 04.10.2001 US 970588
(71) Applicant: EASTMAN KODAK COMPANY, Rochester, New York 14650 (US)
(72) Inventor: Che-Mponda, Aleck Humphrey, Eastman Kodak Company, Rochester, New York 14650-2201 (US); Hoeflein, Karl F., Eastman Kodak Company, Rochester, New York 14650-2201 (US); Wasilewski, Jerome, James, Eastman Kodak Company, Rochester, New York 14650-2201 (US); Birecree, John James, Eastman Kodak Company, Rochester, New York 14650-2201 (US)
(74) Representative: Haile, Helen Cynthia

(57) **Abstract**

A method of ordering a digital image service over a communication network. The method includes the steps of: (a) at a first image system, viewing and selecting at least one digital image; (b) selecting the digital image service to be ordered and generating an image order request comprised of the at least one digital image and order information; (c) selecting a second image system, remote from the first image system, for providing the digital image service; (d) transmitting the image order request over the communication network from the first image system to the second image system; (c) at the second image system, accessing the at least one digital image and order information from the image order request; and (f) providing the requested digital image service whereby the at least one digital image is incorporated in an imaging product, processed to produce an edited digital image, stored, retrieved, or transmitted over the communication network. The system and method of the present invention provides a developer, third party equipment, storage providers and/or retailer, with the ability to network connectivity between image systems which provide image capture, process, display and storage capability and image systems which provide image services (for example, fulfilling an image order request) by employing a common software interface system. Image services may range from imaging products (i.e., digital photographic hard copy prints, digital media containing images, embedded image software products and other image-related products) to imaging services like image storage and retrieval, image processing and image transmission.

## Description

The invention relates to digital imaging, and more particularly to accessing and transmitting digital images, as part of an image order request, over a communication network for use in providing an image service.

It is well known to order goods and/or services over a communication network, such as the Internet. It is also well known that such goods and/or services may include images provided by a customer. U.S. Patent Nos. 5,666,215; 5,760,917; 6,017,157; and 6,133,985 disclose the use of a communications network to order images. The images supplied by the customer can arise from a variety of sources. One source of images is provided by the development of a roll of photographic film. The images can be viewed prior to the ordering of goods and/or services with respect to such images or shared with third parties such as friends, relatives or business associates. An example is illustrated by the Picture Preview Center kiosk by Eastman Kodak Company. This service offers consumers the opportunity to customize their develop and print orders by allowing them to preview their images from the roll of film prior to having them printed as disclosed in U.S. Patent Nos. 5,739,928; and 6,157,435.

Images may also be provided by digital image files. Scanners, image-producing kiosks, digital cameras, and computers are well known as image capture devices to create a digital image file, as well as importing digital image files from various digital media. It is also well known that these image capture devices can be networked. An example is the Picture Maker™ kiosk by Eastman Kodak Company. This kiosk is able to upload digital image files for remote storage or importing digital image files from various media or from remote storage via a network connection.

In addition, computers have image related software applications, which can also perform various image processing functions. Such applications typically either modify the existing digital image file or create a new digital image file. Output from these applications across the communication network requires that the digital image file be transmitted. Dedicated computers for imaging applications are typically referred to as "imaging application stations". Likewise, other dedicated computers for a specific imaging application, like "preview and select", would be referred to as "preview and select station".

As a networked device, a digital photofinishing system is well known for customer image order fulfillment. Over a network, the photofinishing system can receive customer orders and distribute fulfilled orders. In other instances, online fulfillment systems, such as Ofoto, provide digital image file storage from which a customer can view its uploaded images, as well as perform image manipulation of those images and subsequently select them as a customer order request. This typically requires for the modification of the existing digital image file or the creation of a new digital image file.

Digital images can be previewed in a particular order and then subsequently selected for performing image editing. Selection of a desired product and/or service and submission of an order request for the edited image requires that the image be transmitted as part of the order fulfillment request.

Additionally, through the technological advances in the density of small memory chips and storage chips, digital cameras can package digital image files with metadata for uploading.

Accordingly, there are five functions which might be requested by a customer: uploading of an image, storing of an image, retrieval/downloading of an image, fulfillment of an order, and fulfillment-related information querying. There exists a need for a system and method which integrates these five functions with a single, common interface to provide a process for digital image fulfillment. Such a common interface would allow interconnection of products/services from numerous image systems. The interface should employ a data structure and a file transfer mechanism to provide the five functions associated with a digital photofinishing image system. The common interface should promote uniform connectivity for imaging related functions across the communication network, and improve maintainability and configuration connectivity.

An object of the present invention is to provide a system and method of accessing and transmitting images over a communication network for use in photofinishing.

Another object of the present invention is to provide an interface which supports uploading of an image, storing of an image, retrieval of an image, fulfillment of an order, and downloading of an image.

These objects are given only by way of illustrative example. Thus, other desirable objectives and advantages inherently achieved by the disclosed invention may occur or become apparent to those skilled in the art. The invention is defined by the appended claims.

According to one aspect of the invention, there is provided a method of ordering a digital image service over a communication network. The method comprises the steps of: (a) at a first image system, viewing and selecting at least one digital image; (b) selecting the digital image service to be ordered and generating an image order request comprised of the at least one digital image and order information; (c) selecting a second image system, remote from the first image system, for providing the digital image service; (d) transmitting the image order request over the communication network from the first image system to the second image system; (e) at the second image system, accessing the at least one digital image and order information from the image order request; and (f) providing the requested digital image service whereby the at least one digital image is incorporated in an imaging product, processed to produce an edited digital image, stored, retrieved, or transmitted over the communication network.

According to another aspect of the invention, there is provided a system for transmitting and accessing an image order request comprised of at least one image and order information over a communication network from a first image system to a second image system remote from the first image system. The system comprises (a) means for enabling uploading of the image order request to the communication network; (b) means for enabling transmitting of the image order request to the second image system for imaging service fulfillment; (c) means for enabling previewing and selecting of the at least one image of the image order request; (d) means for enabling previewing of the at least one image and image editing of the at least one image; (e) means for enabling storing of the at least one image using the image order request in an image archive; (f) means for enabling retrieving of the at least one image using the image order request from the image archive; and (g) means for enabling downloading of the at least one image for viewing or generating another image order request without including the at least one image in the another image order request.

According to a further aspect of the invention, there is provided a method for ordering a digital photographic product produced using at least one digital image, from a client connected to a fulfillment system by a communications network. The method comprises the steps of: (a) the client requesting an order identifier from the fulfillment system; (b) the fulfillment system verifying information about a user ordering the digital photographic product; (c) the fulfillment system generating the order identifier and communicating the order identifier to the client in response to the request; (d) the client communicating a storage size requirement associated with the order, along with the order identifier, to the fulfillment system; (e) the fulfillment system determining whether the storage size is available on the fulfillment system, reserving the storage size if the storage space is found to be available, and communicating the result of the determination to the client; and (f) in response to the communication of the result of the determination, the client communicating the order, along with the order identifier, for the digital photographic product, the order including the at least one digital image, only if the storage space is found to be available.

According to a yet another aspect of the invention, there is provided method for ordering a digital photographic product produced using at least one digital image, from a client connected to a fulfillment system by a communications network. The method comprises the steps of: (a) the client requesting an order identifier from the fulfillment system; (b) the fulfillment system verifying information about a user ordering the digital photographic product; (c) the fulfillment system generating the order identifier and communicating the order identifier to the client in response to the request; (d) the client transmitting to the fulfillment system over the communication network a request for a list of available products available for fulfillment by the fulfillment system; (e) the fulfillment system transmitting the list of available products to the client; and (f) the client transmitting an image order request to the fulfillment system for at least one of the products available from the list of available products.

The present invention provides a system and method which integrates these five functions with a single, common interface to provide a process for digital photofinishing. A common interface in accordance with the present invention employs a data structure and a file transfer mechanism to provide the five functions associated with a digital photofinishing image system. The common interface in accordance with the present invention provides a uniform connectivity for imaging related functions across the communication network, and improves maintainability and configuration connectivity, since the same connectivity interface needs to be maintained instead of individual and customized interfaces for each system interface.

The foregoing and other objects, features, and advantages of the invention will be apparent from the following more particular description of the preferred embodiments of the invention, as illustrated in the accompanying drawings.

FIG. 1 shows a schematic of the interface providing connectivity between various photofinishing image systems in accordance with the present invention.

FIGS. 2 and 3 illustrate a single, common connectivity interface in accordance with the present invention that supports a plurality of photofinishing-related image systems networked through a set of system interfaces to build a digital photofinishing system across the communication network.

FIG. 4 shows the interface architecture of the present invention.

FIG. 5 shows a typical communication between the client of a server and the server itself in accordance with the present invention.

FIG. 6 illustrates the request/response model for the SubmitOrder method.

FIG. 7 shows a method in accordance with the present invention for determining whether there is space on the server to accept a photofinishing order of a particular size.

FIG. 8 shows a method in accordance with the present invention for retrieving a list of products available in a fulfillment system

### DETAILED DESCRIPTION OF THE INVENTION

The following is a detailed description of the preferred embodiments of the invention, reference being made to the drawings in which the same reference numerals identify the same elements of structure in each of the several figures.

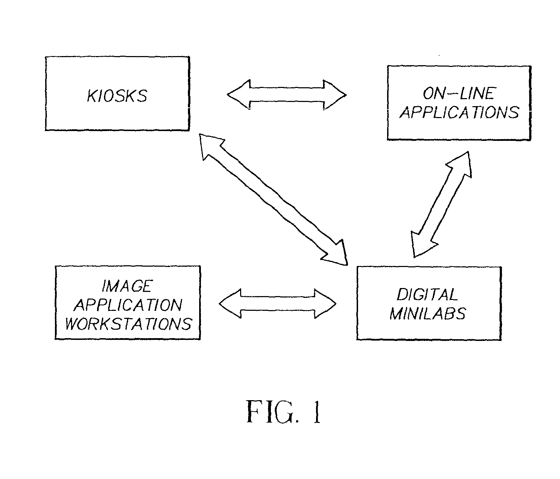

Various systems and/or system components (hereinafter collectively referred to as image systems) can be used in photofinishing/image fulfillment. As illustrated in Figure 1, such image systems include stand-alone kiosks (i.e., image producing devices), image application workstations, digital minilabs, and on-line applications. The present invention provides a common interface to these image systems which allows two-way communication between the image systems, as represented by the double arrows, by means of a communication network. Other system components, for example image capture devices and image display stations, may also be included as image systems. Image capture devices include a digital camera, video camcorder, scanner or fax machine. Image display stations include mobile/transportable devices such as cellular phones, PDAs or other display appliances, as well as televisions or projection screens.

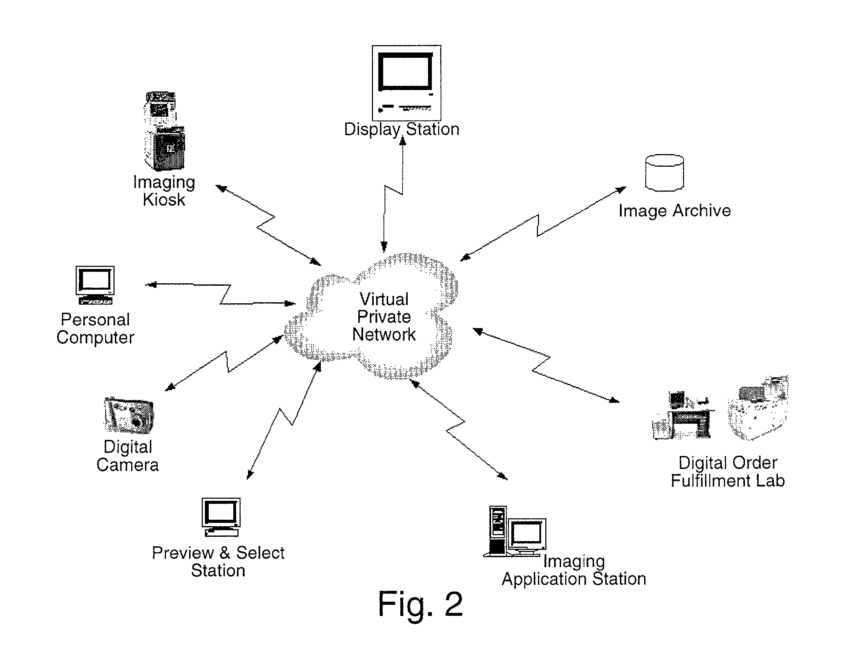

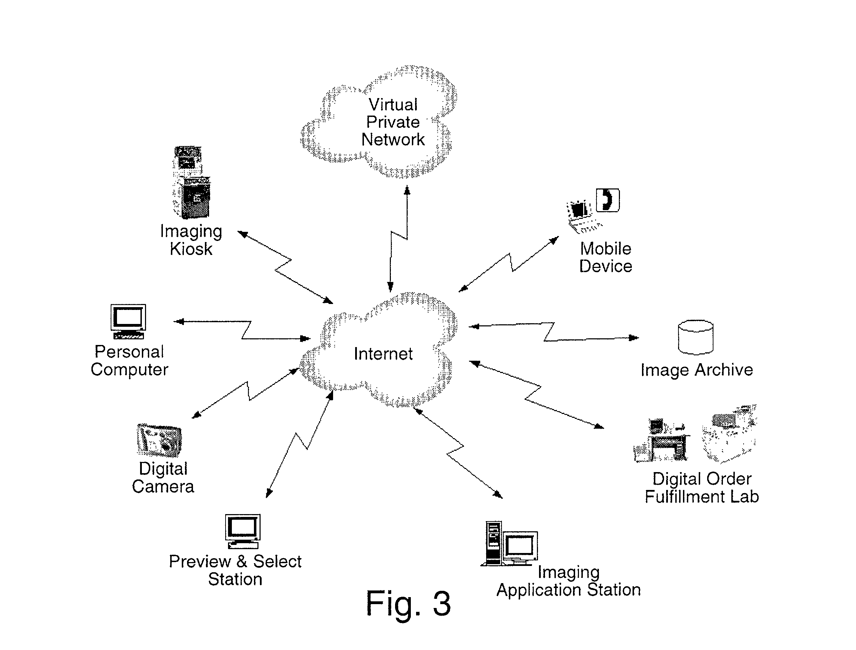

Figures 2 and 3 illustrate a single, common connectivity interface in accordance with the present invention that supports a plurality of digital image services across the communication network, (i.e., a local network and/or the Internet) of image systems. Each image system can be networked to other photofinishing-related image systems. Traditionally, these interfaces are dissimilar and common only between those two image systems. The present invention provides a single, common connectivity interface which can be used across each of the image systems shown in Figures 2 and 3.

The invention of the present invention relates to the transmitting and accessing of digital images over a communication network for use in providing a photofinishing-related digital image service. More specifically, the present invention relates to a common interface which provides the requested digital image service whereby at least one digital image is incorporated in an imaging product, processed to produce an edited digital image, stored, retrieved or transmitted over the communication network. The present invention provides multiple system functional applications which can be performed across the network and across a variety of image systems utilizing a common interface that is device-independent. Additionally, this common interface provides the capability to reduce/eliminate the need for retransmitting the same digital image, or a modified version of that image, to the same image system. This invention employs the features and characteristics of a standard communication protocol and the packaging of the image order request as a standard interface method for transmission across the network in order to perform multiple system functional applications to provide the digital image services.

The present invention provides the use of a common interface implementation for (1) uploading of digital images onto the network, for example for storage or display, (2) the fulfillment of a customer order request for digital image services based upon the digital images and associated information across the network, (3) previewing of those images online and selecting specific digital images that were previously uploaded for customer order fulfillment, (4) previewing those images online, manipulating specific digital images that were previously uploaded for customer order fulfillment, and then submitting a customer order request of the manipulated images, based upon the previously transmitted digital images, and (5) downloading of digital images for viewing and subsequent fulfillment.

The term "communication network" is broadly defined to include both wired and wireless connectivity, and ranges in complexity from a direct "point to point" connection between two devices (i.e., image systems), a local area network or wide area network, to the Internet or a satellite network. Transmittal of digital image order request refers to the movement of the digital image order from a first location to a second location for the purpose of performing a digital image service. Further, the term "device-independent" refers to the ability to replace one device with another device at a particular location, both having similar capabilities, to request and/or perform the same function without the need to modify the transmission or access method described herein. This is achieved through the implementation of a widely accepted communication protocol that is incorporated within devices and operating systems for purposes of providing communication transactions between devices, wherein at least one such device is part of an image system.

The image system at the first location initiates the transmission, as the source of the request and/or the image and its associated data. It is also referred to as the client in a client-server environment. Likewise, the image system at the second location is the receiver of the transmission, as the destination of the request and/or image and its associated data. This location performs the function to satisfy the request. It is also referred to as the server in a client-sever environment.

The present invention also provides a system and method for exchanging photofinishing data and instructions between customers and fulfillment image systems (i.e., photofinishing labs, photoprocessing centers, on-line storage facilities). It permits a customer to connect directly to an image system for order fulfillment, image storage, image retrieval and fulfillment system queries. The system and method of the present invention is intended for use by fulfillment system labs, existing fulfillment system providers, individual customers, software developers, or other parties. It uses widely accepted open standards for data formatting (such as SOAP, XML) and connectivity (such as TCP/IP and HTTP).

The present invention supports such photofinishing activities as submitting photofinishing orders to a fulfillment system; querying the status of a previously submitted order; querying a list of orders matching various criteria like customer identification, date ranges, order status, querying a list of available products; querying a list of available locales; and retrieving a list of image(s) belonging to a particular order.

The present invention supports communication with a wide range of server image systems including photofinishing systems; service providers that might connect to a photofinishing system; retail stores that connect to a photofinishing system; and servers that serve various type of PDAs (personal digital assistant) hand-held devices which connect to a photofinishing system.

The present invention supports a variety of front-end applications, including web-based applications, covering various photofinishing activities.

Using the present invention, multiple client applications can access the same data at a photofinishing system. Likewise, multiple server applications can respond to a client application. With the popularity of the World Wide Web, customers are increasingly more likely to use multiple applications―either mobile based, desktop based, retail based, or Web based―to perform photofinishing activities. For example, a customer can place orders at home with a desktop application and also do the same while at work with a Web-based application. At a later time, the customer could query the status from a PDA or preview images online with a cell phone..

The present invention can be implemented on a variety of front-end client image systems, including those running Windows 95, Windows 98, Windows NT, Macintosh, or UNIX. It can also be employed a variety of Web-based environments, including those using HTML, Java, JavaScript, or ActiveX. Similarly, the present invention can be implemented on a wide variety of server image systems that can handle SOAP requests and generate the specified SOAP responses.

The present invention employs an image order request which is broadly defined to include at least one digital image and order information, wherein the order information comprises such information as user information, vendor information, product information, source image details, print conditional information and/or ICC profiles. The image order request is used to transmit the digital image service being requested. In the present invention, the image order request is structured as a single data file. That is, both the digital image supplied by the customer and the associated data information is bundled into a single data file, referred to as the image order request.

While those skilled in the art will be familiar with other suitable data structures, one example of a suitable data structure for the image order request is the COS (Customer Order Specification) format developed by Eastman Kodak Company. COS is a predefined specification for uniformity of digital information exchange and can be viewed as a digital envelope for fulfillment of image print orders. COS files contain sufficient data needed by the image fulfillment centers for fulfilling an order.

A COS order is a collection of images and printing specifications sent by a client to a printer.

A client is the software that generates requests, receives responses and processes them. For example, this may be a desktop application, a web browser running locally interactive code (such as with a Java applet or ActiveX control), a Web server, or a proxy.

A fulfillment system (FS) is an image system that is capable of fulfilling photofinishing image order requests. Clients that have a direct relationship with a fulfillment system can connect to them for their photofinishing needs.

An image archive image system is a server which provides online image archive storage. Images are archived as agreed upon with the customer. In another embodiment, it is also a server which provides temporary storage of consumer images during the fulfillment process. Images are stored as long as needed to satisfy any potential redo/reprint requests.

A product refers to the output from a fulfillment system. For example, clients can order one or more of the products that they might be interested in (e.g. 4 x 6 matte finish prints, a 5x7 print, a coffee mug with image, a poster). A product may be provided either as a hardcopy or softcopy.

A protocol includes rules determining the format and transmission of data between computers. High-level protocols deal with the data formatting, including the syntax of messages, the terminal to computer dialogue, character sets, and sequencing of messages.

SOAP (Simple Object Access Protocol) is a proposed W3C standard for remote data exchange with XML. The present invention identifies the use of a specific file transfer mechanism, such as SOAP, with its request/response messaging capabilities. Information about the SOAP 1.1 Specification is available at http://xml.apache.org/soap/index.html.

A request is information sent by the client. For example, if SOAP is employed, the request comprises the entire SOAP message sent by the client, including the header.

A client is the software that submits the request for a first location.

A response is information sent by the server. For example, if SOAP is employed, the response comprises the entire SOAP message sent by the server, including the headers.

A server is the software that receives requests at a second location, processes them, and generates responses.

A service provider (SP) refers to an entity with which the user does not have a direct relationship. Generally, such an entity is subcontracted by the fulfillment system to provide specific services to the customer on behalf of the fulfillment system.

A user refers to the person or entity interfacing with the client to cause it to generate requests.

XML (eXtensible Markup Language) is an intermediate level in between SGML (Standard General Markup Language) and HTML (HyperText Markup Language). It allows users to create custom tags, unlike HTML that limits the user to a set of predefined tags. This is the strength of XML that allows users to describe data in an open, yet uniform format. Information about the XML 1.0 Specification is available at http://www.w3.org/XML/.

The present invention defines the request and response messages, using SOAP as an embodiment, for each photofinishing service (e.g., submitting orders, querying status, querying order information, querying product information et al.)

The present invention enables a client-server system. A user uses a client application at the client image system to communicate with a server at a fulfillment image system. A set of servlets are used to receive the request at the server image system and respond back to the client.

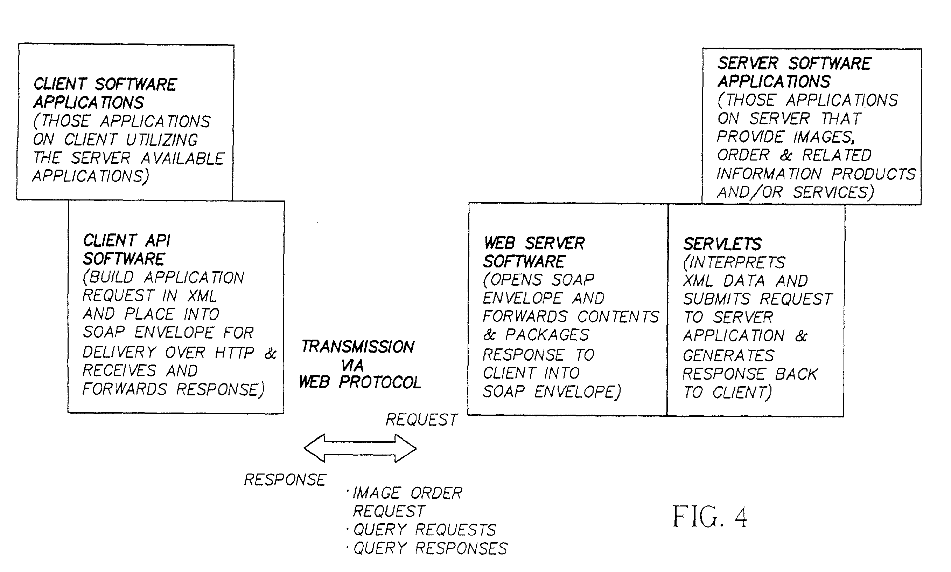

Figure 4 shows the interface architecture of the present invention. The client has software applications that use services of a particular server. As the requestor, the client invokes application program interfaces (APIs) to perform the necessary steps to retrieve results. These APIs employ the request/response model to build the structure for exchanging data with the server. The request contents is provided in XML and placed into a SOAP envelope to be delivered over HTTP. At the server, a web server opens the SOAP envelope and the servlets, acting as a translator, interpret the XML and, acting as an interactor, submits the request to the appropriate server software application. Upon submittal, the server generates the response back through the servlets and the web server packages it into a SOAP envelope over HTTP for transmission over the communication network. The client API receives the response and extracts the response data for use by the client software application.

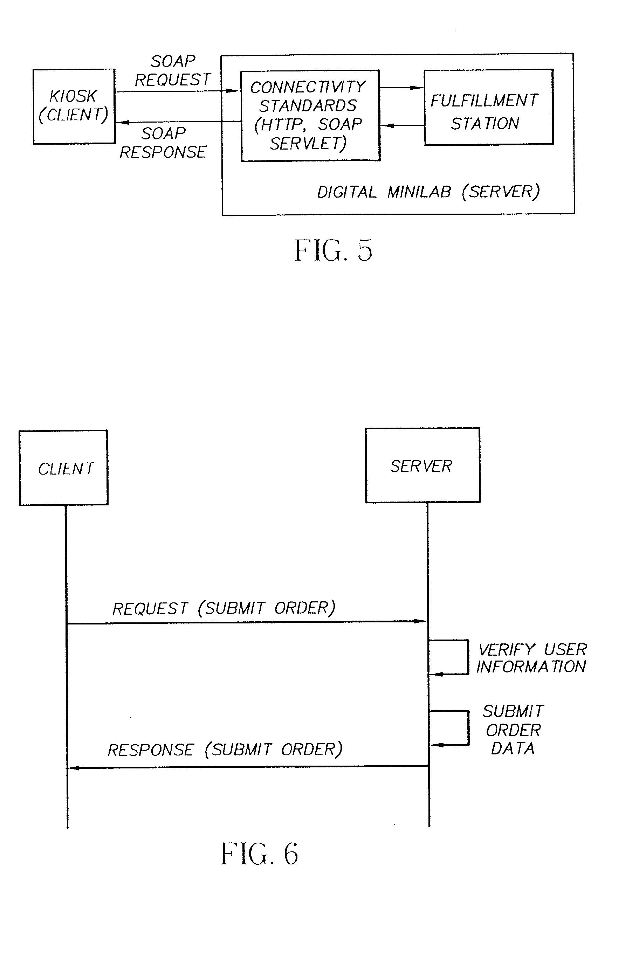

Figure 5 shows a typical communication between the client of a server and the server itself in accordance with the present invention. In particular, the communication session employs a SOAP request/response model structure to communicate unique requests across the communication network, as a web service. The form of communication is the request from the client to the server with a response back from the server to the client.

Figure 6 illustrates the request/response model for the SubmitOrder method, which is used to submit the image order request across the common interface. In particular, the client makes a request for SubmitOrder method, passing session information and a valid order id. The server then verifies the user information and stores the image order request on the server during the upload process. After the client does a successful upload, the server submits the order and responds a HTTP status of the order submission to the client.

**Data Transport** Under the preferred embodiment, clients use the HyperText Transport Protocol (HTTP) to communicate to a server. Information about HTTP/1.1 is available at http://www.cis.ohio-state.edu/htbin/rfc/rfc2616.html. The World Wide Web throughout uses the same HTTP protocol. In principle, a fulfillment system can use any off-the-shelf web server to implement its support for the present invention. To communicate over the Internet, the client must establish an Internet or Intranet connection. This connection can be a dial-up Point-to-Point Protocol (PPP) connection to an Internet Service Provider (ISP) or a connection over a local area network that has a gateway to the Internet or a simple Intranet. Clients use SOAP-based messages over HTTP to communicate to a fulfillment system server. Clients use the SOAP client to send a request to the previously acquired Uniform Resource Locator (URL) for the desired fulfillment system. The URL identifies the SOAP request dispatching servlet on a server that can accept requests, process the request and produce a response. The POST identifies the data type. Other fields should be filled as per the SOAP specification.

**Request/Response Model** Under the preferred embodiment, transactions across the network follow the simple request/response model similar to the one used by HTTP. As described above, Figure 5 illustrates a typical communication between a kiosk (i.e., the client of a server) and a photofinishing lab (i.e., the server) using this model. Based on the business rules of each system component and its applicability for each request, an appropriate response message is generated and sent to the client. Requests from clients and responses from the server are generated by SOAP.

**Structure** The structure of a request and response includes headers, basic syntax, and the particular request and response. The data includes a SOAP envelope and SOAP body. The SOAP body includes a request/response data. When sent over the Internet using HTTP as an embodiment, standard HTTP and (optionally) multi-part MIME headers and formats surround the data.

**HTTP Headers** Data delivered by way of HTTP places the standard HTTP result which defines a status code. Servers can return any standard HTTP result. The present invention requires a HTTP standard header, for example:

| Header | Value | Description |
|---|---|---|
| Content-type | text/xml | The MIME type |
| Content-Length | Length | Length of the data after removing HTTP headers. |
| Host | Host | The host to whom client submits its request. |

**SOAP envelope** The contents of a data file includes simple declarations followed by contents defined by those declarations. The SOAP declaration creates shortcuts for the SOAP envelope and aspects of the XML schema.

**List of requests** The interface of the present invention preferably includes a list of unique requests that can be implemented using APIs (Application Program Interface), as appropriate, for communicating between system components. An example of such a list in the preferred embodiment is the following:

| Name of the request/response method | Description |
|---|---|
| GetServerVersion | Retrieve the version information. |
| Connect | Establish a session with the server. |
| GetLocale | Retrieve the locale for the current session. |
| GetAvailableLocales | Retrieve all supported locales. |
| SetLocale | Set a new locale for the current session. |
| AreICCProfilesSupported | Query the server for ICC profile support. |
| GetAvailableProducts | Retrieve all available products. |
| GetNewOrderID | Requests a new order id from the server. |
| ReserveSpace | Request the server to allocate space for an order. |
| GetResubmitStartByte | Query to find the start byte for continuing a partially submitted order. |
| SubmitOrder | Submit a COS order to the server. |
| GetOrders | Retrieve a list of orders. |
| GetOrderStatus | Query the status of an order. |
| GetImageRefs | Retrieve a list of image ids. |
| GetImages | Retrieve a list of image URLs. |
| Disconnect | Terminates a session. |

**Status codes for return values** Each of the APIs preferably returns a method status code to the client that will inform the client about the status of the requested operation. Therefore servers preferably send a status element with a code and a textual message to clients that will provide information about the status of the request.

**Session management** The APIs may require clients to establish a session and use the session identification returned by the servers to identify themselves. It is preferred that sessions created by clients be monitored for inactivity and disconnected after a configured period of time (e.g. 30 minutes). Server implementations can remove disconnected sessions if they decide to do so. Also, session information could be retained for a considerable period of time in order to facilitate the tracking of usage patterns or any other purposes that the server deems useful.

**APIs (Application Program Interface)** Clients use various services available at a fulfillment system by invoking APIs that will perform the necessary steps to retrieve results. In the preferred embodiment, the following APIs are explained further.

**Connect request and response** Clients that use the services of a fulfillment system provide a URL to establish a connection to that server. This URL is a SOAP server entry point that accepts SOAP requests and dispatches them to the appropriate processing components and sends back a SOAP response to its clients. To authenticate the users that are registered in the system, clients log into the server by making a "Connect" call using an authentication process. Upon successful authentication, the server sends back the status of the "Connect" request and session related information to the client, which will be used by the client in its future transactions with the server within the same "Connect" time span. After all its operations are completed, the client can make a "Disconnect" call that will mark the current "Connect" session as terminated on the server.

**GetServerVersion request and response** This feature allows clients to request version information of the server. The server returns its version information to the client. The client makes a request for GetServerVersion() method on the server, and the server retrieves the necessary version information and returns it to the client.

**AreICCProfilesSupported request and response** Clients can query various products and features available at a fulfillment system. ICCProfiles is one of the features that a client might want to query and this is done via the AreICCProfilesSupported() request. ICCProfiles represents the color space information for an image. AreICCProfilesSupported() should allow clients to query the server to know if a fulfillment system supports ICC Profiles.. The clients query the server to know if it supports ICCProfiles, and the server retrieves the information about support for ICC profiles and returns it to the client. Information about the ICC Profiles specification is available at http://www.color.org/ICC-1_1998-09.PDF.

**Disconnect request and response** When a client is done with the transactions, it needs to terminate its connection with the server that it originally created with a Connect() call. The means to do this is by a simple Disconnect() call. A client sends in the session id information to the server to request a Disconnect(). In a typical implementation, the server verifies the user and marks the session as invalid. If a Disconnect() request is made by a client while other requests are pending, then all pending requests can continue to complete their tasks. If a client wants to interact with a server after making a disconnect call, it should make a connect request to establish a session with the server. Therefore, the client makes a request for aDisconnect() call passing in the session information, the server verifies the user information and marks the session entry as terminated, and then the server returns the status of the Disconnect() operation to the client.

**GetNewOrderID request and response** This method allows the client to request the server to fetch a new order id for an order that will be submitted. This is usually in accordance with a protocol of fetching an order id and reserving the necessary space for this order on the server and then submitting the order. Therefore, the client requests a new order id from the server via GetNewOrderID() call with the necessary authentication information, the server verifies the user information and generates a new order id, and the generated order id is returned to the client.

**GetOrderStatus request and response** This method allows clients to query a fulfillment system for the status of an order. The clients make a request which is verified by the server. The resultant order status information is passed back to the client.

**GetLocale request and response** This method allows clients to query the locale that is currently used by the server to communicate all responses. Server implementations can store/retrieve locale information for clients on the server using their own convenient storage mechanism. Supported locales are represented using the ISO standard codes The server verifies the user information and fetches the locale information, such as language and currency

**SetLocale request and response** Clients can set the locale to be communicated with, by specifying a locale that gets updated in the server. Clients select a locale from a list of locales available and supported by the server using the GetAvailableLocales() method. All communication between the client and the server from this point onward will be in the locale that was set by the client in a SetLocale() call. The server verifies the user information and updates itself with the new locale information sent by the client. The updated locale is sent back to the client.

**GetAvailableLocales request and response** Clients can get a list of locales that are currently supported by a server. Servers maintain a list of locales that they support for a given implementation and return this list. The clients make a request and the server verifies the user information and fetches the locale information. The retrieved locale list is sent to the client.

**GetAvailableProducts request and response** This method allows clients to retrieve a list of products available in a fulfillment system. Locale is used by fulfillment system to return product descriptions in the locale-specified language, if possible. The clients make a request and the server verifies the user information and fetches the product list. The resultant product list is returned to the client.

**GetOrders request and response** This method allows clients to retrieve a list of orders, for a given customer id, based upon date range, order status and order id search constraints. This method might return orders that were submitted to the fulfillment system through sources other than SubmitOrder(). The clients make a request and the server verifies the user information and retrieves the order list for the constraint specified. The resultant order list is returned to clients.

**GetImageRefs request and response** Clients can retrieve a list of image ids that belong to a particular order. These image ids can be used in other APIs to fetch more information about those images. The clients make a request and the server verifies the user information and fetches the image id list. The resultant image id list is returned to the client.

**GetImages request and response** Clients that have already retrieved the image ids from a prior call to GetImageRefs() can make a call to GetImages() and retrieve the URLs for those image ids. The clients make a request and the server verifies the user information and fetches the image URL list. The resultant image URL list is returned to the client.

**Interrupted file upload** Network transmissions are vulnerable and may break due to various reasons. It is a burden on clients to redo the transmission from the start after a failed attempt. The present invention provides them with the flexibility to continue from where they left off during an earlier attempt rather than a complete re-transmission. Photofinishing order files submitted by clients to a server are susceptible too. To make this interrupted file upload effective there is some amount of knowledge required by the client and the server.

**ReserveSpace request and response** This method allows the client to verify that there is enough space on the server to accept a photofinishing order of a particular size. Input to this method is also used for handling interrupted file uploads. Clients calculate the total size of the file to be uploaded. The client makes a request, passing session information, order id and the total size of the order and the server verifies the user information and verifies the availability of space. If space is found to be available, the server preserves the order id and file size information. The server returns the space availability result to the client.

**GetResubmitStartByte request and response** When submission of an order file is interrupted, clients resubmits the file from where they left off during a previous attempt. The server sends back information about the amount of data transferred so far, from which the clients send the remaining order data. The client makes a request and the server verifies the user information and identifies this order and retrieves the partial upload information. The retrieved partial upload information is returned to the client.

**SubmitOrder request and response** After reserving space for an order on the server via ReserveSpace(), the client can submit the COS order to the server. The client makes a request and the server verifies the user information and stores the order data on the server during the upload process. After the client does a successful upload, the server processes the order. The server returns the status of order submission to the clients.

**Example 1:** Employing the present invention, a user views a plurality of digital images and selects at least one of the digital images for a particular digital image service (for example, online image storage) at a first image system, for example, an imaging kiosk. An image order request is generated by the first image system and transmitted over the communication network using the common interface. It is received at a second image system, for example an image archive, where the at least one digital image are stored, thereby providing the requested digital image service with the appropriate storage information provided back to the user at the first image system.

In another related employment of the present invention, the user at a later time is at another first image station at a first location, for example a 'preview and select station', and requests to view the stored images which were previously stored at the second image system. Using the common interface, the image order request for the digital image service is transmitted so as to retrieve the stored image. Subsequently, the user at the 'preview and select station' views the stored image and, for example, selects one digital image for a print order. An image order request comprises the print order. The image order request is generated by the first image system and transmitted over the communication network using the common interface. It is received at the second image system for print order fulfillment as the requested digital image service. If the second image system is associated with the image archive referenced above, then only a reference to the digital image needs to be sent as part of the image order request for fulfillment. Subsequently, the user can query the status of the image order request using the common interface from another image system, for example, a personal home computer.

**Example 2:** Employing the present invention, a user at a first image system, for example an 'imaging application station', requests, using the common interface, at least one digital image in an image order request that was previously transmitted over a communication network and cached for hardcopy printing at a second image system, for example a digital order fulfillment lab. The second image system fulfills the image order request by transmitting the digital image to the first image system. The user performs image edits and manipulations on the digital image received at the first image system. When the image edits are completed, the user requests, using the common interface, a list of available digital image service(s) from the second image system. On receipt of the list, the user then selects the desired digital image service, the image order request is generated. The image order request is transmitted over the communication network, using the common interface, to the second image system to provide the selected digital image service.

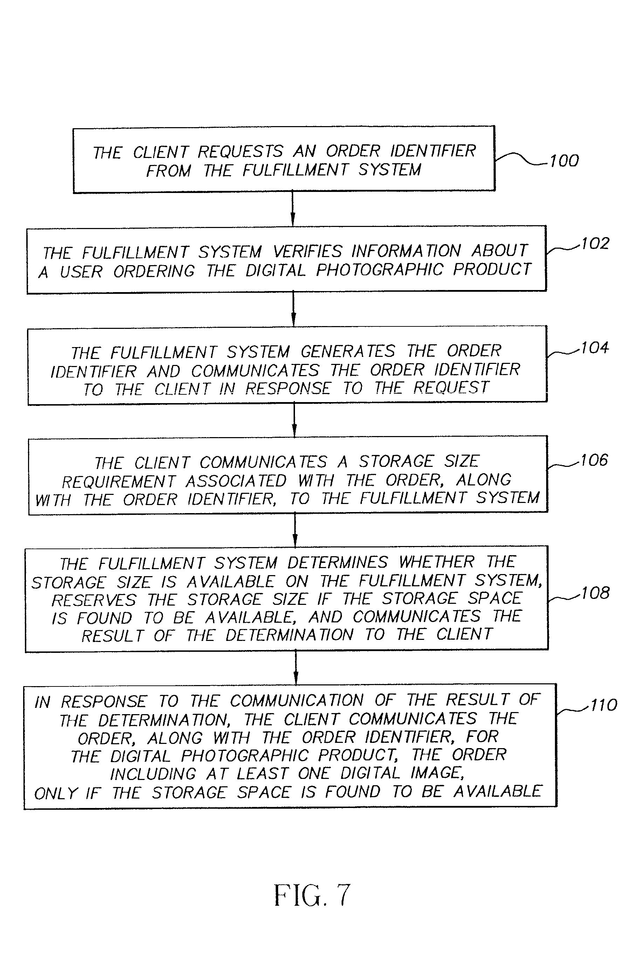

**Example 3:** Prior to submitting an image order request, the first image system (i.e., the client) communicates with the second image system (i.e., the fulfillment system employed as the server) to determine if there is enough space on the second image system to accept an image order request of a particular size. For example, Figure 7 illustrates a method for ordering a digital photographic product produced using at least one digital image, from a client connected to a fulfillment system by a communications network. At step 100, the client requests an order identifier from the fulfillment system. The fulfillment system then verifies information about a user ordering the digital photographic product (step 102). At step 104, the fulfillment system generates the order identifier and communicates the order identifier to the client in response to the request. The client communicates a storage size requirement associated with the order, along with the order identifier, to the fulfillment system (step 106). The fulfillment system determines whether the storage size is available on the fulfillment system, reserves the storage size if the storage space is found to be available, and communicates the result of the determination to the client (step 108). In response to the communication of the result of the determination, the client communicates the order, along with the order identifier, for the digital photographic product, the order including the at least one digital image, only if the storage space is found to be available (step 110).

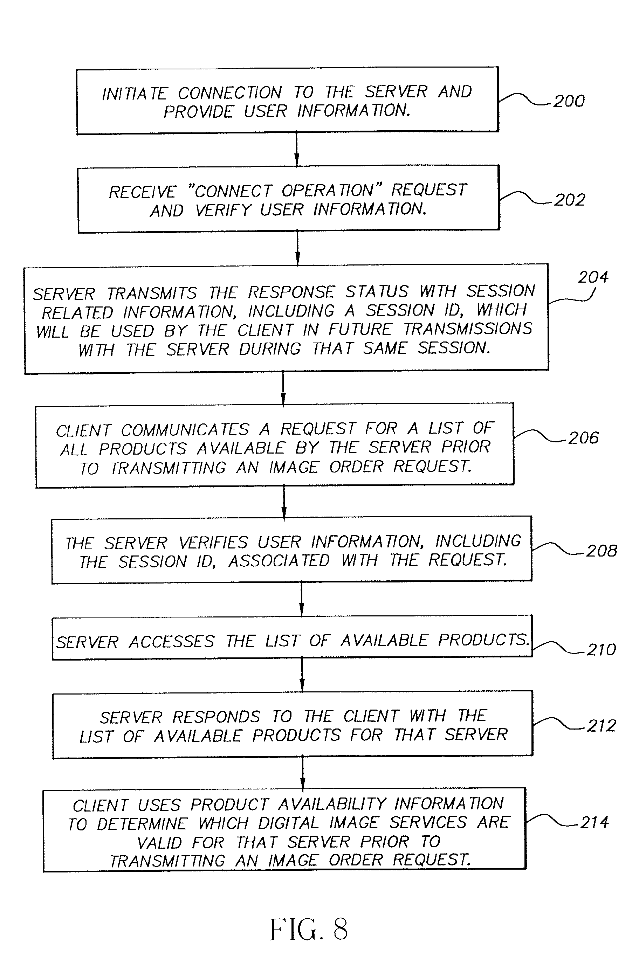

**Example 4:** The present invention provides for the retrieval of a list of products available at a particular fulfillment system. Accordingly, for this particular example, the fulfillment system is the server. Figure 8 illustrates a method for determining a list of products available at a fulfillment system from a client connected to the fulfillment system by a communications network. The method employs querying an image system prior to selecting a digital image service and generating an image order request for transmission over the communication network using the common interface of the present invention. At step 200, the client, as the first image system, initiates a connection over the communication network to communicate to the fulfillment system (i.e., the server), as the second image system, and provides user information. The fulfillment system receives the request to connect and verifies the user information (step 202). Once verified, the fulfillment system transmits a response message to the client providing a response status (step 204). The response status includes session related information (such as a session id) that is used by the client in subsequent transmissions over the communication network with the fulfillment system for that same session. In one such transmission (step 206), the client transmits a request for a listing of the products available by the fulfillment system. Such a request is transmitted prior to transmitting an image order request. At step 208, the fulfillment system verifies the user information in the image order request, including the session id. Once verified, the fulfillment system accesses the list of its available products (step 210). The fulfillment system then transmits a response back to the client, including the list of available products for that fulfillment system (step 212). The client uses the product availability information to determine the appropriateness of transmitting an image order request to that fulfillment system for a desired digital image service (step 214).

## Claims

1. A method of ordering a digital image service over a communication network, comprising the steps of:
(a) at a first image system, viewing and selecting at least one digital image;
(b) selecting the digital image service to be ordered and generating an image order request comprised of the at least one digital image and order information;
(c) selecting a second image system, remote from the first image system, for providing the digital image service;
(d) transmitting the image order request over the communication network from the first image system to the second image system;
(e) at the second image system, accessing the at least one digital image and order information from the image order request; and
(f) providing the requested digital image service whereby the at least one digital image is incorporated in an imaging product, processed to produce an edited digital image, stored, retrieved, or transmitted over the communication network.

2. The method of Claim 1, further comprising the step of selecting the digital image service to be ordered for the edited digital image and generating the image order request without having to resend a digital image in the image order request.

3. The method of Claim 1, further comprising the steps of, prior to transmitting the image order request:
communicating a storage size requirement associated with the image order request from the first image system to the second image system;
the second image system determining whether the storage size is available on the second image system;
communicating the result of the determination to the first image system; and
the second image system reserving the storage size if the storage size is available on the second image system.

4. The method of Claim 1, prior to providing the requested digital image service, further comprising the steps of:
the first image system communicating over the communication network to the second image system, a status request of the transmitted image order request; and
in response to the status request, the second image system communicating over the communication network to the first image system, an order completion status.

5. The method of Claim 1, prior to selecting the digital image service to be ordered, further comprising the steps of:
the first image system transmitting a request over the communication network for available image services from the second image system; and
in response to the request, the second image system transmitting over the communication network a list of digital image services available from the second image system.

6. The method of Claim 1, prior to selecting the digital image service, further comprising the steps of:
the first image system transmitting a request over the communication network for locale information associated with the second image system; and
in response to the request, the second image system transmitting over the communication network a list of the locale information associated with the second image system.

7. A system for transmitting and accessing an image order request comprised of at least one image and order information over a communication network from a first image system to a second image system remote from the first image system, comprising:
(a) means for enabling uploading of the image order request to the communication network;
(b) means for enabling transmitting of the image order request to the second image system for imaging service fulfillment;
(c) means for enabling previewing and selecting of the at least one image of the image order request;
(d) means for enabling previewing of the at least one image and image editing of the at least one image;
(e) means for enabling storing of the at least one image using the image order request in an image archive;
(f) means for enabling retrieving of the at least one image using the image order request from the image archive; and
(g) means for enabling downloading of the at least one image for viewing or generating another image order request without including the at least one image in the another image order request.

8. A method for ordering a digital photographic product produced using at least one digital image, from a client connected to a fulfillment system by a communications network, comprising the steps of:
(a) the client requesting an order identifier from the fulfillment system;
(b) the fulfillment system verifying information about a user ordering the digital photographic product;
(c) the fulfillment system generating the order identifier and communicating the order identifier to the client in response to the request;
(d) the client communicating a storage size requirement associated with the order, along with the order identifier, to the fulfillment system;
(e) the fulfillment system determining whether the storage size is available on the fulfillment system, reserving the storage size if the storage space is found to be available, and communicating the result of the determination to the client; and
(f) in response to the communication of the result of the determination, the client communicating the order, along with the order identifier, for the digital photographic product, the order including the at least one digital image, only if the storage space is found to be available.

9. A method for ordering a digital photographic product produced using at least one digital image, from a client connected to a fulfillment system by a communications network, comprising the steps of:
(a) the client requesting an order identifier from the fulfillment system;
(b) the fulfillment system verifying information about a user ordering the digital photographic product;
(c) the fulfillment system generating the order identifier and communicating the order identifier to the client in response to the request;
(d) the client transmitting to the fulfillment system over the communication network a request for a list of available products available for fulfillment by the fulfillment system;
(e) the fulfillment system transmitting the list of available products to the client; and
(f) the client transmitting an image order request to the fulfillment system for at least one of the products available from the list of available products.
